# EUROPEAN PATENT APPLICATION

(11) **EP 3 614 646 A1**
(43) Date of publication of application: **26.02.2020**
(21) Application number: 18306136.5
(22) Date of filing: 23.08.2018
(51) Int. Cl.: H04L 29/08, G06F 11/34

(54) **APPLICATION PROGRAM INTERFACE MANAGER LOG VERBOSITIES**

(71) Applicant: Hewlett-Packard Development Company, L.P., Spring TX 77389 (US)
(72) Inventor: MORAES, Mauricio Coutinho, 90619-900 Porto Alegre (BR); PINHEIRO, Daniele Antunes, 90619-900 Porto Alegre (BR); CONNETABLE, Francois, 38053 Grenoble (FR)
(74) Representative: Bryers LLP

(57) **Abstract**

A server that includes an application programming interface (API) manager; a request evaluation module to, when executed by a processor, evaluate a request received from a client device at the API manager; a log rules registry to maintain a number of log verbosity rules; and a log verbosity adjustment module to, when executed by the processor, apply the log verbosity rules to the request and adjust the verbosity of a generated log to be written by the API.

## Description

### BACKGROUND

Application program interfaces (APIs) include a set of subroutine definitions, protocols, and tools used for the purpose of building computer-executable applications to be executed over a network. The APIs may be managed by an API manager that enforces policies associated with the APIs, controls access to the APIs, collects and analyzes API usage data, and reports on the APIs performance in the network. A specific task the API manager engages in is the definition of the proper level for the creation and storage of logs defining any number of user's interactions with any of the individual APIs to be executed.

### BRIEF DESCRIPTION OF THE DRAWINGS

The accompanying drawings illustrate various examples of the principles described herein and are part of the specification. The illustrated examples are given merely for illustration, and do not limit the scope of the claims.
Fig. 1 is a block diagram of a server according to an example of the principles described herein.
Fig. 2 is a flowchart showing a method of generating logs according to an example of the principles described herein.
Fig. 3 is a block diagram of a log generation system according to an example of the principles described herein.
Fig. 4 is a component diagram of a log generation system according to an example of the principles described herein.
Fig. 5 is a sequence diagram showing a process of the log generation system of Fig. 4 according to an example of the principles described herein.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

API managers manage any number of APIs that, either individually or cooperatively, provide services to a user via execution of their respective computer usable program code by a processor. Indeed, a user may not realize that multiple APIs are being executed in order to provide the user with graphical representations of various interfaces the user is interacting with. In some instances, however, the execution of the APIs, due to defects in the computer readable program code or other issues, may not execute correctly thereby limiting or preventing the user from interacting appropriately with the executed program code. In this case, logs associated with the interactions of the user with any of the APIs managed by the API manager. An administrator may then be given a chance to review the logs in order to determine what had occurred so as to correct the improper deployment of any given API.

The amount of logs generated by the APIs, however, is proportional to the number of users interacting with the APIs through the API manager. As the usability of the services provide by the APIs increases, the number of users may also increase thereby increasing the number of logs created. These logs may include any amount of details related to the interaction with any number of APIs. Deciding, however, on the amount of log details

(called herein log "verbosity") to be generated by a deployed application include both economic and security considerations. By way of example, it may be appropriate to have the most detailed high-quality (i.e. clean/useful) and safe (i.e., not disclosing sensitive data) logs for both bug troubleshooting and also as a way of knowing how an application behaves during its lifetime in production environments. However, if the use of an application generates too many logs, the storage cost associated to it and the input/output (I/O) performance hit may easily increase. In some examples, that economic decision had been to support multiple log levels at design time. The runtime log levels to be enabled in a given service instance are defined at deployment time, as a subset of the design time defined levels. This is set without concern as to how the service was to be used such as maintaining settings that are the same for all users running the same code with the same privilege level.

In some examples, log libraries may define a set of built-in log levels. In some log library utilities, the following levels, in order of verbosity, may be employed: TRACE, DEBUG, INFO, WARN, ERROR, and FATAL. If properly instrumented, a deployment at the TRACE level may generate much more verbose logs than the same application deployed to log at the FATAL level. Some log libraries allow for the configuration of log levels specifically by packages or modules, so that the code of a package or module P1 of a deployment can be made to log at the WARN level while another package P2 of the same deployment can be made to log at the INFO level, for example. In order to save application resources, logger objects are static code objects that may be created once and reused across the whole codebase. Multiple loggers can be used in a single application, but the enabled log levels are set via some generic deployment parameters such as environment variables.

While package or module configuration of log levels allows some flexibility and some economy for generating verbose logs, the log creation is not content and/or context sensitive. Indeed, some log libraries executing the package or module configuration of log levels cannot allow for complete control of generating verbose logs based on dynamically defined ruled enforced at the API manager level. The present specification describes, an API manager that takes decision on log verbosity based on a request content and passes on the verbosity decision to the application using dedicate HTTP headers. In an example, an extension is deployed at the application level which takes care of applying the proper effective log level.

The present specification describes a server that includes an application programming interface (API) manager; a request evaluation module to, when executed by a processor, evaluate a request received from a client device at the API manager; a log rules registry to maintain a number of log verbosity rules; and a log verbosity adjustment module to, when executed by the processor, apply the log verbosity rules to the request and adjust the verbosity of a generated log to be written by the API.

The present specification also describes a method of generating logs that includes receiving, at an application program interface (API) manager, a request from a client device; evaluating content of the request; executing a log rule received from a dynamic log rule registry; and setting a log verbosity according to the log rule.

The present specification further describes a log generation system that includes an administrator device; and an application programming interface (API) manager communicatively coupled to the administrator device, the application programming interface (API) manager including a request evaluation module to, when executed by a processor, evaluate a request received from a client device at the API manager; a log rules registry to maintain a plurality of dynamic log verbosity rules; and a log verbosity adjustment module to, when executed by the processor, apply the dynamic log verbosity rules to the request and adjust the verbosity of a generated log to be written by the API.

As used in the present specification and in the appended claims, the term "verbosity" with regard to a log is meant to be understood as logs that include a specific amount of information as well as information that is not proprietary. Proprietary information may include any sensitive data such as social security numbers, credit card information, date of birth of a person, among other information.

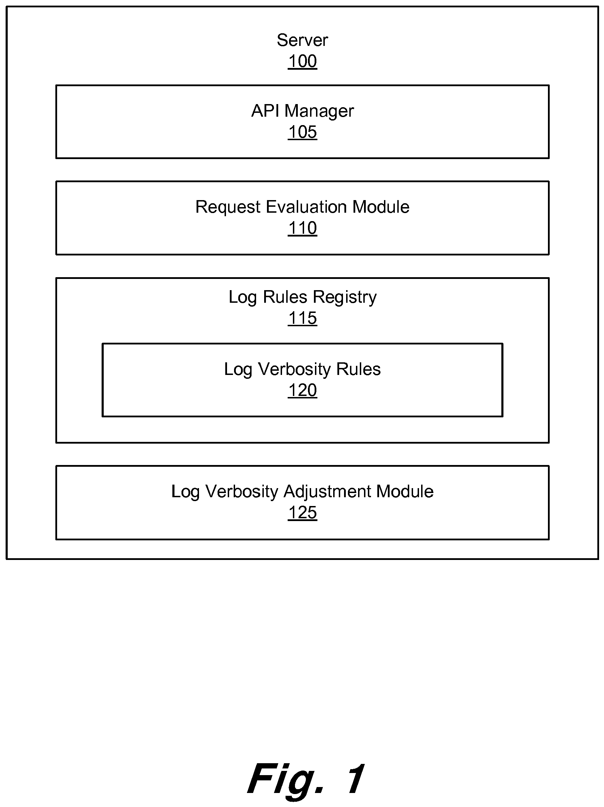

Turning now to the figures, Fig. 1 is a block diagram of a server (100) according to an example of the principles described herein. The server (100) may include an application program interface (API) manager (105) to manage a number of applications that service a number of client devices communicatively coupled to the server (100). In order to provide for communication between the server (100) and the client devices, the server (100) may include a network adapter. The network adapter may provide an interface to other computing devices within, for example, a network, thereby enabling the transmission of data between a processor of the server (100) and other devices such as the client devices located within the network.

The API manager (105) may manage any number of application program interfaces (APIs) that may include a set of subroutines, protocols, and/or tools that, either alone or in combination build an application for a user of a client device to access and implement. The APIs may provide methods of communication between various components of the server (100) such as computer-usable program code maintained on memory devices and various hardware devices of the server (100). In context of the present description, the API manager (105) may receive hypertext transfer protocol (HTTP) requests or secure hypertext transfer protocol (SHTTP) requests from any number of client devices and respond to those requests. As described herein, the API manager (105) may also provide access to a number of log verbosity rules (120) within a log rule registry (115) and respond to the request from the client devices.

In any example, the server (100) may include a request evaluation module (110). The request evaluation module (110) may, when executed by a processor of the server (100), evaluate a request received from a client device at the API manager (105) to determine the content of the request. The content discoverable during the evaluation of the request may include an IP address associated with the request, details regarding a header of the request, the actual content of the request such as text, pictures, etc., the timestamp of the request, the sender of the request (authentication), the size of the request, and access permissions of the sender (authorization), among other details associated with the request.

After the request from the client device is evaluated by the request evaluation module (110), the API manager (105) may load a log verbosity rule (120) that matches the content of the request. Any example of matching log verbosity rules (120) may exist and may be based on any of the content discovered by the request evaluation module (110). By way of example, where the request evaluation module (110) discovered that the request from a first client device included a internet protocol (IP) address, any of the log verbosity rules (120) indicating that the IP address is a condition of that log verbosity rule (120) may be executed by the API manager (105). In this example, the condition of the log verbosity rule (120) including this condition sets of a result of setting a log verbosity level associated with a log to be generated by the API manager (105). Each of the log verbosity rules (120) may have a plurality of conditions that are used to "trigger" the application of any of the given log verbosity rules (120). Indeed, in an example any number of the log verbosity rules (120) maintained in the log rule registry (115) may include, in an example, a condition on the client device identification, a time the request it was received, and the permissions associated with that client device/user of the client device. In this example, where such a client device sends a request having the appropriate permissions to access any given application at the time indicated by the log verbosity rule (120), the verbosity of the log may be altered. In an example, the alteration to the verbosity of the log to be generated based on the applicable log verbosity rule (120) may be set in a customized HTTP request header. The customized HTTP request header may be passed to the managed application within the API by the API manager. During execution, a log library may read the customized HTTP request header and the managed API may create a customized log having the defined verbosity according to the HTTP header. The customized log may then be logged into a log recording system for later review by a network administrator.

Using this method via the server (100) as described, an API manager-enabled network may generate verbose logs without consuming log storage space. This may result in a relatively low-cost bug troubleshooting platform. This method and system may be used in representational state transfer (REST) services where any number of client devices are distributed remotely over a network and communicatively coupled to the server-centric API manager. The present system and methods described herein may be used in connection with any microservice enterprise architecture computing systems and networks.

In any example presented herein, an administrator of the server may dynamically change the log verbosity rules maintained within the log rules registry. In these examples, any given rule may be updated and/or created in real time as the server (100) and API manager (105) are operating as described herein. By allowing for dynamic changes in the log verbosity rules (120), an administrator of the server (100) may change the verbosity of any to-be produced log after detecting that such a change is warranted based on an analysis of how the API manager (105) and/or any of the managed APIs interact with the user. After a log verbosity rule (120) has been created and/or changed by an administrator, the API manager (105) of the server (100) may send a response to the administrator indicating the change and/or addition of the log verbosity rules (120) to the log rule registry (115).

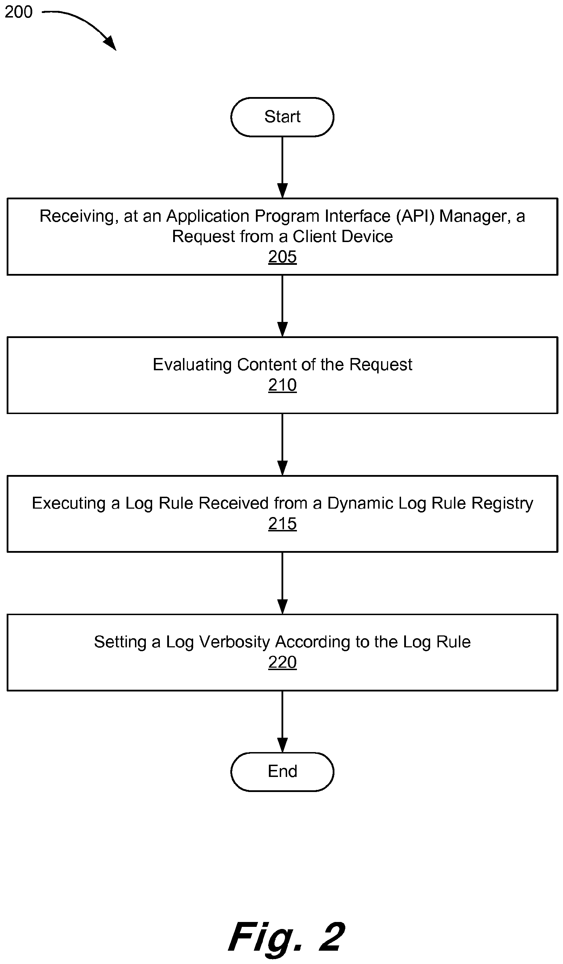

Fig. 2 is a flowchart showing a method (200) of generating logs according to an example of the principles described herein. The method (200) may include receiving (205), at an application program interface (API) manager, a request from a client device. As described herein, the server (100) and more particular the API manager (105) may receive (205) any number of requests from any number of client devices communicatively coupled to the server (100). Each client device maybe communicatively coupled to the server (100) via, for example, a wired or wireless communication.

The method (200) may continue with evaluating (210) content of the request. The content of the request evaluated (210) may include an IP address associated with the request, details regarding a header of the request, the actual content of the request such as text, pictures, etc., the timestamp of the request, the sender of the request (authentication), the size of the request, and access permissions of the sender (authorization), among other details associated with the request.

The method (200) may continue with executing (215) a log rule received from a dynamic log rule registry. As described herein, the log rule may include any conditions such as time conditions, user/client device conditions, IP address conditions, permission conditions, and text conditions, among other types of conditions. In an example, the conditions help to set (220) the log verbosity according to the log rule. Setting the log verbosity associated with any of the given requests received by the server (100) allows an administrator to selectively determine which of the requests result in a robust log verbosity and which of the requests result in a relatively less robust log verbosity. Consequently, a log record system may comprise a series of logs that each include any amount of information related to any request sent to any API. This may save data storage space within the log record system. Relatively fine-grained control for generating verbose logs is, therefore, created based on dynamically defined rules enforced at the API manager level. The API manager (105) makes a decision on log verbosity for every request based on the request content and passes on its decision to the application executed on the API using a dedicated HTTP header. An extension for a log library may be deployed at the application level, which takes care of applying the proper effective log level.

This is in contrast to current approaches in log creation which becomes evident during some troubleshooting scenarios of deployed applications. By way of example, take, for instance, an on-call incident that may be faced in an identity-management system during a period of time: a deployed application rejected as invalid some HTTP requests without explaining why. Presently, multiple log levels are supported at design time which results in runtime log levels to be enabled in a given service instance at deployment time. Because of this, during such an on-call incident, the HTTP response and the associated generated logs may merely inform an administrator that the requests were deemed invalid due to restrictions imposed by the input-validation module of the application. Because a requestor may not be fully aware of the exact request that was being sent to the application, this may result in a very frustrating situation because the on-call administrators would not be able to exactly reproduce the requests and therefore could not accurately diagnose the issue. Without the verbose logs created via the method described herein, additional inconvenient processes used to determine the invalid request may lead to lost production time as well as user frustration. In contrast, the present systems and methods provide for dynamic, runtime, alteration of per-stack log level based on request content. Indeed, the request log-level context evaluation is made outside of the application, as an API management level property. This way, the method benefits to any microservice hosted by that API management solution. Additionally, the method separates service code from content-specific log level decision code.

The present methods and systems, therefore, provide for a lower-cost application troubleshooting process by making it possible to generate verbose logs related to specific situations of application uses (e.g., a clearly defined use-case, in a limited time-frame, for a restricted group of users, from specific IPs of origin, etc.) without consumption of big amounts of storage space. The present methods and systems also potentially decrease the time for bug solving and, accordingly, lowers the cost of application troubleshooting by a network administrator. Even further the present methods and systems potentially improve the overall software quality of the systems due to a better understanding of the authentication/authorization-enabled applications behavior in production environments.

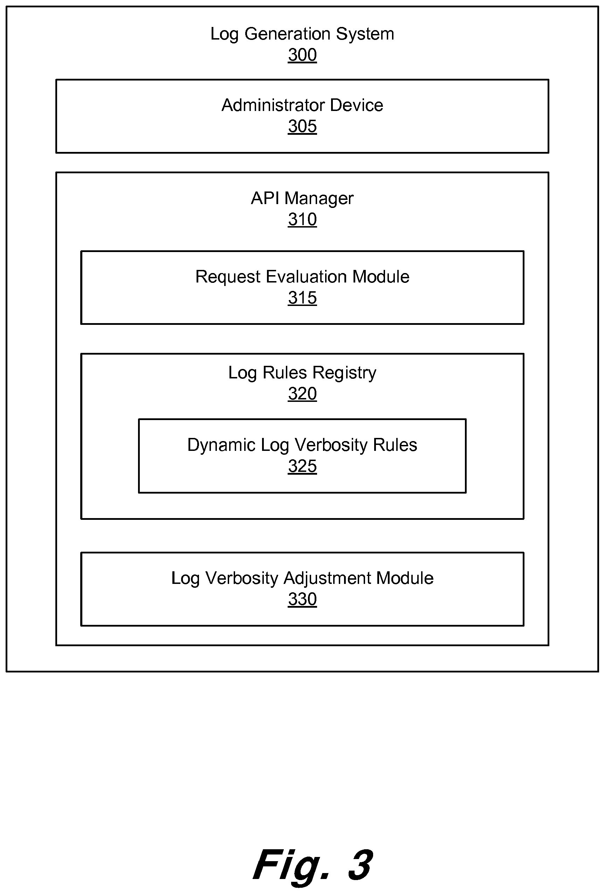

Fig. 3 is a block diagram of a log generation system (300) according to an example of the principles described herein. The log generation system (300) may include an administrator device (305) and an API manager (310). The API manager (310) may include a request evaluation module (315), a log rule registry (320) with its dynamic log verbosity rules (325), and a log verbosity adjustment module (330).

The administrator device (305) may be any type of computing device that interfaces with the API manager (310). In an example, the API manager (310) may be executed on a server and the administrator device (305) may be the server itself. In another example, the API manager (310) may be executed on a computing device separate from the administrator device (305). In any example, the administrator device (305) may include associated permissions to access, manipulate, and/or create the API manager (310), request evaluation module (315), log rule registry (320), dynamic log verbosity rules (325), and/or log verbosity adjustment module (330). In a particular example, the administrator device (305) may access the log rule registry (320) as well as specific dynamic log verbosity rules (325) maintained therein in order to either create and/or change the conditions associated with any of the dynamic log verbosity rules (325). Changing any of the dynamic log verbosity rules (325) may be done dynamically such that, upon changing of the dynamic log verbosity rules (325), the rule is applied on any subsequently received request from a client device communicatively coupled to the log generation system (300) and its API manager (310).

The request evaluation module (315) may be any hardware and/or computer-usable program code that evaluates content of a request received at the API manager (310). As described herein, the content discoverable during the evaluation of the request by the request evaluation module (315) may include an IP address associated with the request, details regarding a header of the request, the actual content of the request such as text, pictures, etc., the timestamp of the request, the sender of the request (authentication), the size of the request, and access permissions of the sender (authorization), among other details associated with the request.

The log verbosity adjustment module (330) may be any hardware and/or computer-usable program code that applies a dynamic log verbosity rule to any received request and adjusts the verbosity of a generated log to be written by the API manager (310).

The various modules within the log generation system (300) (the request evaluation module (315) and the log verbosity adjustment module (330)) may include executable program code that may be executed separately. In this example, the various modules may be stored as separate computer program products. In another example, the various modules within the log generation system (300) may be combined within a number of computer program products; each computer program product comprising a number of the modules.

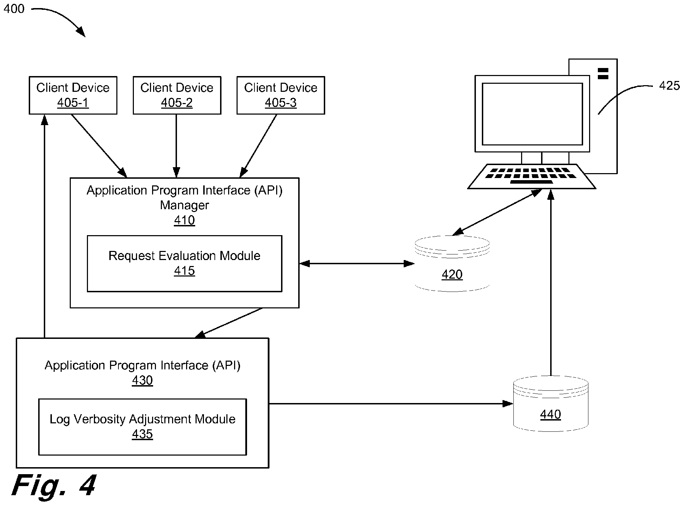

Fig. 4 is a component diagram of a log generation system (400) according to an example of the principles described herein. The log generation system (400) may include any number of client devices (405-1,405-2, 405-3) communicatively coupled to an API manager (410). Although Fig. 4 shows three client devices (405-1,405-2, 405-3) any number of client devices (405-1,405-2, 405-3) may be communicatively coupled to the API manager (410). The client devices (405-1,405-2, 405-3) may each send requests for services from any number of applications managed by the API manager (410) in order to receives services from the log generation system (400) as described herein.

The API manager (410) may, therefore, receive any number of requests and with a processor execute a request evaluation module (415). The request evaluation module (415) may determine the content of each request. The content of the request that may be discoverable by the request evaluation module (415) may include an IP address associated with the request, details regarding a header of the request, the actual content of the request such as text, pictures, etc., the timestamp of the request, the sender of the request (authentication), the size of the request, and access permissions of the sender (authorization), among other details associated with the request.

Once the evaluation of the request is completed by the request evaluation module (415), the API manager (410) may load and apply any number of dynamic log rules maintained in the log rules registry (420). The log rules registry (420) may maintain any number of rules generated by an administrator using an administrative computing device (425). The dynamic log rules allow for specific levels of verbosity in a log to be created. As described above, the dynamic rules may be created at any time during operation of the log generation system (400) and uploaded to the log rules registry (420) by the administrative computing device (425). So long as the dynamic log rules are created, the API manager (410) will load and apply those rules to the request being evaluated.

Once the applicable rules have been applied, the API manager (410) may set the appropriate log verbosity to the request via its HTTP header. With the appropriate log verbosity set, the API manager (410) forwards the request onto an API (420) a requested by the client devices (405-1,405-2, 405-3) in the initial request. Services may be provided by the API (420) according to each of the APIs (430) executed computer-readable program code maintained in a data storage device of the log generation system (400).

The APIs (430), in an example, may include a log verbosity adjustment module (435). The log verbosity adjustment module (435) may read the HTTP header of the request received from the API manager (410) and apply the defined verbosity as indicated. In an example, the log may be sent to a log recordation system (440) to be maintained therein so that an administrator on the administrative computing device (425) may access them.

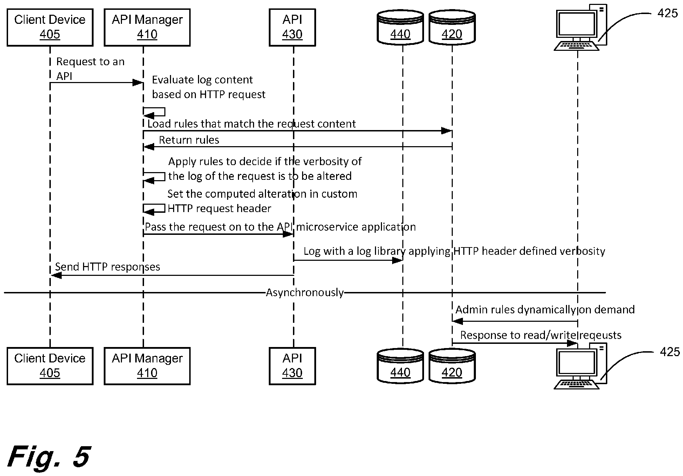

Fig. 5 is a sequence diagram showing a process of the log generation system of Fig. 4 according to an example of the principles described herein. The sequence diagram shows the processes executed by the client devices (405-1,405-2, 405-3), API manager (410) with its request evaluation module (415), the APIs (430) with their log verbosity adjustment module (435), and the administrative computing device (425). In an example, each of the processes may be executed asynchronously, that is, independent of any particular flow.

The described log generation system (400) includes a close integration between the log rules registry (420) and API manager (410) and its request evaluation module (415). As long as the log rules registry (420) has access to a proper log level associated to the content of a current request from a client device (405-1,405-2, 405-3) accessing an API (430), verbose logs may be readily available in a much more controlled and economic way. This is because the administrator may create any dynamic log rule to be used in the operation of the log generation system (400) at any time and with any conditions associated with any request. Thus, some requests that may not necessarily warrant a verbose log to be created may be limited in the information associated therewith while other requests whose logs may be beneficial to an administrator to be more verbose may be created. This ensures that an administrator may be able to address invalid requests with the most and appropriate level of information associated with the log while saving space within the log recordation system (440).

As described herein, the administrative computing device (425) may provide to the log rules registry (420) any number of dynamic log rules to be applied that may limit and expand the verbosity of each log created for each request received. Indeed, the verbosity of any given log created is limited by the conditions within each of the dynamic log rules created. These conditions may include any condition associated with the discoverable content of the requests by the request evaluation module (415). Indeed, in an example, the changes to the verbosity of any given log may be set to be dependent on the IP address associated with the IP address associated with the request, details regarding a header of the request, the actual content of the request such as text, pictures, etc., the timestamp of the request, the sender of the request (authentication), the size of the request, and access permissions of the sender (authorization), among other details associated with the request. This allows an administrator to dynamically set rules that will affect the verbosity of logs created from any single request or groups of requests associated, for example, with any entity accessing the API manager (410).

Aspects of the present systems and methods are described herein with reference to flowchart illustrations and/or block diagrams of methods, apparatus (systems) and computer program products according to examples of the principles described herein. Each block of the flowchart illustrations and block diagrams, and combinations of blocks in the flowchart illustrations and block diagrams, may be implemented by computer usable program code. The computer usable program code may be provided to a processor of a general-purpose computer, special purpose computer, or other programmable data processing apparatus to produce a machine, such that the computer usable program code, when executed via, for example, the processor of the server (100) or other programmable data processing apparatus, implement the functions or acts specified in the flowchart and/or block diagram block or blocks. In one example, the computer usable program code may be embodied within a computer readable storage medium; the computer readable storage medium being part of the computer program product. In one example, the computer readable storage medium is a non-transitory computer readable medium.

The preceding description has been presented to illustrate and describe examples of the principles described. This description is not intended to be exhaustive or to limit these principles to any precise form disclosed. Many modifications and variations are possible in light of the above teaching.

## Claims

1. A server, comprising:
an application programming interface (API) manager;
a request evaluation module to, when executed by a processor, evaluate a request received from a client device at the API manager;
a log rules registry to maintain log verbosity rules; and
a log verbosity adjustment module to, when executed by the processor, apply the log verbosity rules to the request and adjust the verbosity of a generated log to be written by the API.

2. The server of claim 1, wherein the generated log is written by the API to a log library.

3. The server of claim 1, the verbosity of the log is defined by a verbosity level based on the log rules.

4. The server of claim 3, wherein the rule setting the verbosity level is based on the client device sending the request.

5. The server of claim 3, wherein the rule setting the verbosity level is based on the time of day the request is received by the API manager.

6. The server of claim 3, wherein the rule setting the verbosity level is based on the type of request sent to the API manager.

7. The server of claim 1, wherein the log verbosity rules are executed in real time.

8. A method of generating logs, comprising:
receiving, at an application program interface (API) manager, a request from a client device;
evaluating content of the request;
executing a log rule received from a dynamic log rule registry; and
setting a log verbosity according to the log rule.

9. The method of claim 8, wherein setting the log verbosity includes setting the log verbosity via a hypertext transfer protocol (HTTP) header.

10. The method of claim 8, comprising, with the log rule, creating log verbosity levels.

11. The method of claim 10, wherein the log rule comprises criteria that for the log verbosity levels, the criteria comprising an IP address associated with the request, details regarding a header of the request, content of the request, a timestamp of the request, a sender of the request (authentication), a size of the request, and access permissions of a sender (authorization) of the request.

12. The method of claim 10, comprising receiving at an administrator's endpoint device, dynamic rules to be stored in the dynamic log rule registry, the dynamic rules being updated independent of a redeployment of an application.

13. A log generation system, comprising:
an administrator device; and
an application programming interface (API) manager communicatively coupled to the administrator device, the application programming interface (API) manager comprising:
a request evaluation module to, when executed by a processor, evaluate a request received from a client device at the API manager;
a log rules registry to maintain a plurality of dynamic log verbosity rules;
a log verbosity adjustment module to, when executed by the processor, apply the dynamic log verbosity rules to the request and adjust the verbosity of a generated log to be written by the API.

14. The log generation system of claim 13, wherein the log rule registry comprises rules setting criteria that create log verbosity levels, the criteria comprising an IP address associated with the request, details regarding a header of the request, content of the request, a timestamp of the request, a sender of the request (authentication), a size of the request, and access permissions of a sender (authorization) of the request.

15. The log generation system of claim 14, wherein the log verbosity levels define the verbosity of log saved by the API to a log repository.
